# EUROPEAN PATENT SPECIFICATION

(11) **EP 2 487 884 B1**
(45) Date of publication and mention of the grant of the patent: **11.09.2019**
(21) Application number: 11153439.2
(22) Date of filing: 04.02.2011
(51) Int. Cl.: H04M 1/725, H04B 5/00

(54) **Mobile wireless communications device to detect movement of an adjacent non-radiating object and associated methods**
Mobile drahtlose Kommunikationsvorrichtung zur Bewegungsdetektion eines angrenzenden, nichtstrahlenden Objekts und zugehörige Verfahren
Dispositif mobile de communications sans fil pour détecter le mouvement d'un objet adjacent non radiant et procédés associés

(43) Date of publication of application: 15.08.2012
(73) Proprietor: BlackBerry Limited, Waterloo, ON N2K 0A7 (CA)
(72) Inventor: Moosavi, Vahid, Waterloo Ontario N2L 3W8 (CA); Rose, Scott Douglas, Waterloo Ontario N2L 3W8 (CA)
(74) Representative: Fennell, Gareth Charles

(56) References cited:
- EP-A2- 2 144 425
- WO-A1-2010/141878
- WO-A2-2005/101176
- WO-A2-2009/105115
- US-A1- 2008 006 762

## Description

### Technical Field

The present disclosure relates to the field of mobile wireless communications devices, and, more particularly, to mobile wireless communications devices including Near Field Communications (NFC) circuits.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices also allow users to send and receive electronic mail (e-mail) messages wirelessly and access the Internet via a cellular network and/or a wireless local area network (WLAN), for example. In addition, these devices may allow users to send Short Messaging Service (SMS) messages, Personal Identification Number (PIN) messages, and instant messages.

Given the amount of information now stored on a mobile device itself and the pervasive use of e-mail and PDA features, some users may desire quick access to their upcoming appointments, most recently received e-mails, etc. Therefore, some mobile devices may display a home screen providing a variety of data, such as the date and time, together with the most recently received e-mails or SMS messages and upcoming appointments. Consequently, such a home screen provides a variety of information in one location, readable with a quick glance.

Since the reduction of power consumption is a common concern with a mobile device, some mobile devices may dim (or even shut off) their display when not in use. This deprives a user the ability to quickly glance at the home screen, or any other open screen, without reactivating the display. Since reactivating the display to merely view the home screen may be burdensome, new methods of reactivating a display, or performing a device function, are desirable.

WO 2009/105115 discusses initiating transmission of data on a mobile device by making physical contact with another device. The physical contact can be any type of physical touch that is referred to as a "tap" or "tapping"' When a tap is detected by a device, the device may initiate near field communication (NFC) with the other tapping device. NFC may be used to communicate data between the two devices, or NFC may be used to exchange sufficient information to allow the devices to establish a communication channel via another communication link. In some embodiments, an NFC-enabled mobile device can be used to gather group data relating to users having mobile devices that are within NFC range of one another and which initiate the aggregation of group data by the tapping of three or more devices.

WO 2005/101176 is directed to a user interface for an electronic device (and corresponding method) that is arranged and constructed for intuitive control of interface functionality. The user interface includes a user interface component, e.g. speaker, microphone, display backlighting, etc., that is one of a plurality of user interface components. Interface circuitry is coupled to the user interface components. A sensor located in a position that is logically associated with, e.g., proximate to or co-located with, the user interface component and configured to provide an output signal when the sensor is triggered, e.g., by proximity to a user. The output signal facilitates, via for example a controller, a change in an operating mode of one or more of the user interface components.

WO 2010/141878 is directed to a mobile device which includes a sensor processor system, an application processor system and a power management controller that controls power being applied to the application processor system. The sensor processor system monitors sensors connected to the mobile device. The sensor processor system detects a pre-defined gestures and an environmental condition or event based on the monitoring. The pre-defined gesture corresponds to one or more actions initiated by a user of the mobile device (e.g., the user jogs with the mobile device, places the mobile device in his/her pocket or backpack, etc.). The sensor processor system selects a power profile to be applied to the application processor system based on the detection, and instructs the power management controller to apply the selected power profile to the application processor system.

US 2008/006762 is directed to apparatuses and methods to sense proximity and to detect light. In one embodiment, an apparatus includes an emitter of electromagnetic radiation and a detector of electromagnetic radiation. The detector has a sensor to detect electromagnetic radiation from the emitter when sensing proximity, and to detect electromagnetic radiation from a source other than the emitter when sensing visible light. The emitter may be disabled at least temporarily to allow the detector to detect electromagnetic radiation from a source other than the emitter, such as ambient light. In one implementation, the ambient light is measured by measuring infrared wavelengths. Also, a fence has a non-IR transmissive material disposed between the emitter and the detector to remove electromagnetic radiation emitted by the emitter.

### Brief Description of the Drawings

FIG. 1 is a schematic block diagram of a mobile wireless communications device in accordance with the present disclosure.
FIG. 2 is a schematic block diagram of another embodiment of a mobile wireless communications device in accordance with the present disclosure.
FIG. 3 is a schematic block diagram of a further embodiment of a mobile wireless communications device in accordance with the present disclosure.
FIG. 4 is a flowchart of a method of operating a mobile wireless communications device in accordance with the present disclosure.
FIG. 5 is a high-level block diagram showing example additional components that can be used in the wireless communications device shown in FIG. 1.

### Detailed Description

Aspects and features of the claimed subject matter are set out in the appended claims.

The present description is made with reference to the accompanying drawings, in which various embodiments are shown. However, many different embodiments may be used, and thus the claims should not be construed as limited to the embodiments set forth herein. Rather, these embodiments are provided so that this disclosure will be thorough and complete. Like numbers refer to like elements throughout, and prime notation is used to indicate similar elements in alternative embodiments.

Generally speaking, a mobile wireless communications device may include a wireless transceiver, a Near Field Communications (NFC) device, and a processor coupled with the wireless transceiver and the NFC device. The processor may be configured to cooperate with the wireless transceiver for wireless communications, and detect movement of a non-radiating object adjacent the NFC device. The processor may also be configured to perform at least one function based upon detection of movement.

The mobile wireless communications device may have an accelerometer coupled with the processor. The processor may be configured to perform the at least one function further based upon data from the accelerometer.

Additionally or alternatively, the detection of movement may be based upon the accelerometer.

In some applications, the processor may be switchable between a first mode and a second mode, and the at least one function may comprise switching between the first mode and the second mode. The first mode may comprise a low power mode, and the second mode may comprise an active mode.

A display may be coupled with the processor. In addition, the at least one function may comprise activation of the display. The processor may be configured to detect movement based upon an impedance change in the NFC device. The wireless transceiver may comprise a cellular transceiver.

A method aspect is directed to a method of operating a mobile wireless communications device comprising a processor cooperating with a wireless transceiver for wireless communications. The method may include detecting movement of a non-radiating object adjacent a NFC device, using the processor. The method may also include performing at least one function based upon the detected movement, using the processor.

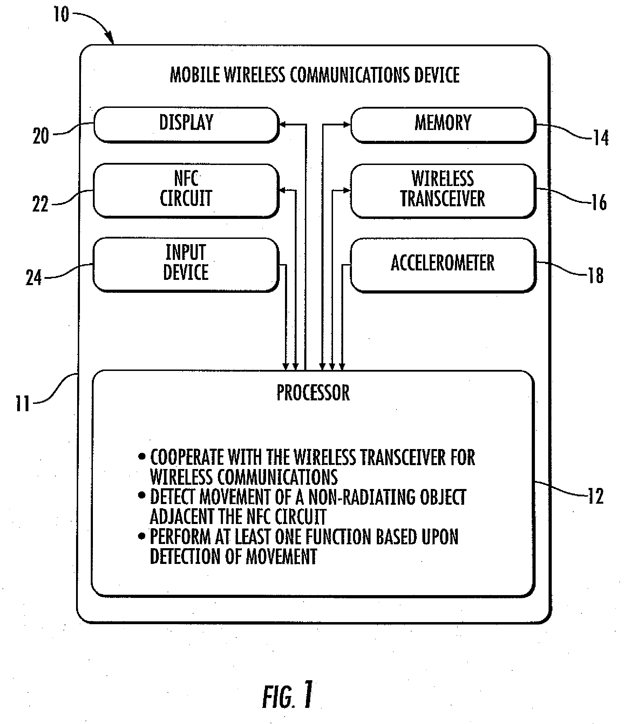

With reference initially to FIG. 1, a mobile wireless communications device **10** in accordance with the present disclosure is now described. Example mobile wireless communications devices **10** may include portable or personal media players (e.g., music or MP3 players, video players, etc.), remote controls (e.g., television or stereo remotes, etc.), portable gaming devices, portable or mobile telephones, smartphones, tablet computers, etc. The mobile wireless communications device **10** includes a portable housing **11** carrying a processor **12** that is, in turn, coupled to a memory **14,** a wireless transceiver **16,** an accelerometer **18,** a display **20,** a Near Field Communications (NFC) circuit **22,** and an input device **24.** The memory **14** may include both volatile portions, such as Random Access Memory (RAM), and non-voltile portions, such as Flash RAM, in some applications. The display **20** may comprise an Organic Light Emitting Diode (OLED) display, or may comprise a Liquid Crystal Display (LCD) or other suitable display. The input device **24** may comprise a keyboard, touch sensitive pad, trackball, or thumbwheel, for example. In addition, the input device **24** may include any number of separate components, such as a keyboard and a touch sensitive pad. Further, it should be appreciated that the display **20** may comprise a touch sensitive display and may therefore act as at least a portion of the input device **24.** The wireless transceiver **16** may include a cellular transceiver or a WLAN transceiver, for example, and the processor **12** cooperates with the wireless transceiver for wireless communications.

In some applications, the processor **12** is switchable from a first mode of operation to a second mode of operation. For example, the processor **12** may be switchable from a low power mode to an active mode. By low power mode, it is meant that the processor is operating in a state that conserves power, for example by running at a lower frequency than optimal for performance. Such a low power mode is useful for conserving power, especially when the mobile wireless communications device **10** is not in active use. As such, the processor **12** may be configured to switch itself from the active mode to the lower power mode after a given period of time during which it has not been in use.

The processor **12** may display a home screen on the display **20.** This home screen may be a default screen, and may include a variety of data such as the date and time, a number of recent e-mail or SMS messages, and a number of missed calls. The home screen may even include portions of recently received e-mail and SMS messages, and weather forecasts, for example. Indeed, this home screen may be configurable to display a variety of information about, and accessible by, the mobile wireless communications device **10.**

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

In the mobile wireless communications device **10** of the present disclosure, however, the NFC circuit **22** is also used for additional functions unrelated to data communications with another device. For example, the processor **12** detects movement of a non-radiating object adjacent the NFC circuit **22,** and performs at least one function based upon the detected movement. By a non-radiating body, it is meant that the body does not radiate electromagnetic waves in a frequency typically used for wireless communications. For example, a human body (or portion thereof, such as a hand), does not radiate such electromagnetic waves typically used for wireless communications (i.e. used for cellular communications, Bluetooth(tm) communications, or NFC communications). Moreover, it should be understood that such a non-radiating body also does not radiate electromagnetic waves, or an electromagnetic field, of a type that would be detected by a typical Hall-effect or magnetic field sensor.

This advantageously allows the processor **12** to detect, via the NFC circuit **22,** a portion of a human body moving adjacent the NFC circuit **22,** and to then, in response, perform at least one function. The at least one function may include switching the processor **12** between the first and second modes, activating the display **20,** activating a backlight of the display or the keyboard **24,** etc. The at least one function may include other functions, such as changing the active ringer of the mobile wireless communications device **10** (for example, from a vibrate mode to an audible ringer mode). In this disclosure, performing the at least one function may be referred to as "awakening" the mobile wireless communications device **10.**

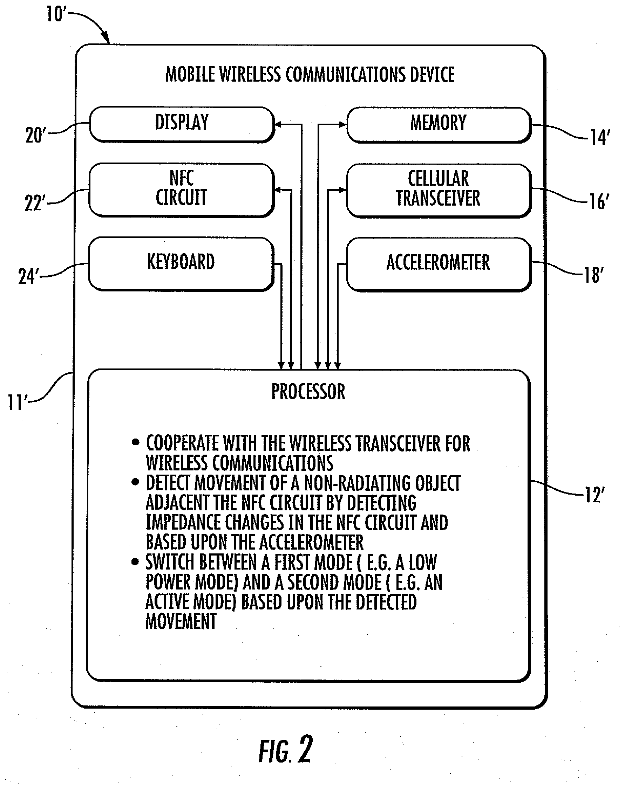

With additional reference to FIG. 2, it shall be understood that the processor **12',** in some applications, detects movement of the non-radiating object adjacent the NFC circuit **22'** by detecting impedance changes in the NFC circuit, and based upon the accelerometer **18'.** By detecting movement of the non-radiating object adjacent the NFC circuit **22'** based upon the accelerometer **18',** it is meant that the processor **12'** either begins the process of detecting movement of a non-radiating object, or does not, based upon the accelerometer **18'.** For example, if the processor **12'** determines that the mobile wireless communications device **10'** is at rest, via the accelerometer **18',** it may then begin the process of detecting movement of a non-radiating object adjacent the NFC circuit **22'.** Likewise, if the processor determines that the mobile wireless communications device **10'** is not at rest, it may not begin the processor detecting movement of a non-radiating object until such time as the mobile wireless communications device is at rest.

After a successful detection, the processor **12'** then switches itself between a low power mode and an active mode based upon detected movement, for example from the lower power mode to the active mode. This functionality advantageously allows the processor **12'** to be switched between the lower power mode and the active mode without physical contact being made with the mobile wireless communications device **10'.**

As stated earlier, the movement of the non-radiating object adjacent the NFC circuit **22'** is detected based upon impedance changes in the NFC circuit **22'.** By this, it is meant that the NFC circuit **22'** emits a series of radio-frequency pulses, and the processor **12'** monitors the impedance of the load being driven by the NFC circuit **22',** which typically comprises a NFC antenna. The presence of a non-radiating body near the NFC antenna alters the impedance of the antenna, and thus the impedance seen by the portion of the NFC circuit **22'** driving the antenna. This impedance change results from a typical person being made of, for example, 60% water. The processor **12'** detects this impedance change and interprets it as indicating movement of a non-radiating object adjacent the NFC circuit **22'**. Elements not specifically discussed are similar to those in the mobile wireless communications device **10** as discussed above and shown in FIG. 1, and require no further discussion herein.

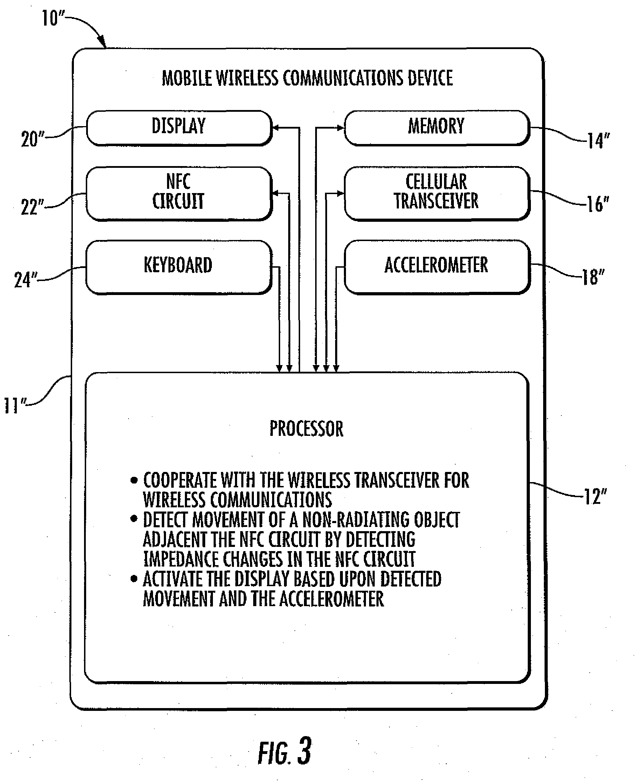

In an alternative embodiment shown in FIG. 3, the processor **12"** detects movement of the non-radiating object adjacent the NFC circuit **22"** by detecting impedance changes in the NFC circuit. Here, the processor **12"** performs the at least one function (here, activation of the display) based upon detected movement and the accelerometer **18".**

By performing the at least one function based upon the accelerometer **18",** it is meant that the processor **12"** may perform the function or not, even if movement of a non-radiating object adjacent the NFC circuit **22"** has been detected, based upon the accelerometer **18".** For example, if the processor **12"** determines that the mobile wireless communications device **10"** is at rest, via the accelerometer **18",** it may then activate the display **20"** based upon detected movement. Likewise, if the processor **12"** determines that the mobile wireless communications device **10"** is not at rest, via the accelerometer **18",** it may then not activate the display **20"** even if movement is detected. Elements not specifically discussed are similar to those in the mobile wireless communications device **10** as discussed above and shown in FIG. 1, and require no further discussion herein.

It should be understood that the above disclosed embodiments are not limited to the features as disclosed. Indeed, these features may be mixed and matched among the embodiments. For example, the mobile wireless communications device **10'** of FIG. 2 may activate the display **20'** based upon detected movement, in addition to, or instead of, switching between the low power mode and the active mode. Likewise, the mobile wireless communications device **10'** may switch the processor **12'** between the low power mode and the active mode also based upon the accelerometer **18'.** Similarly, the mobile wireless communications device **10"** of FIG. 3 may switch the processor **12"** between the low power mode and the active mode based upon detected movement, in addition to activating the display **20"** based upon detected movement and the accelerometer.

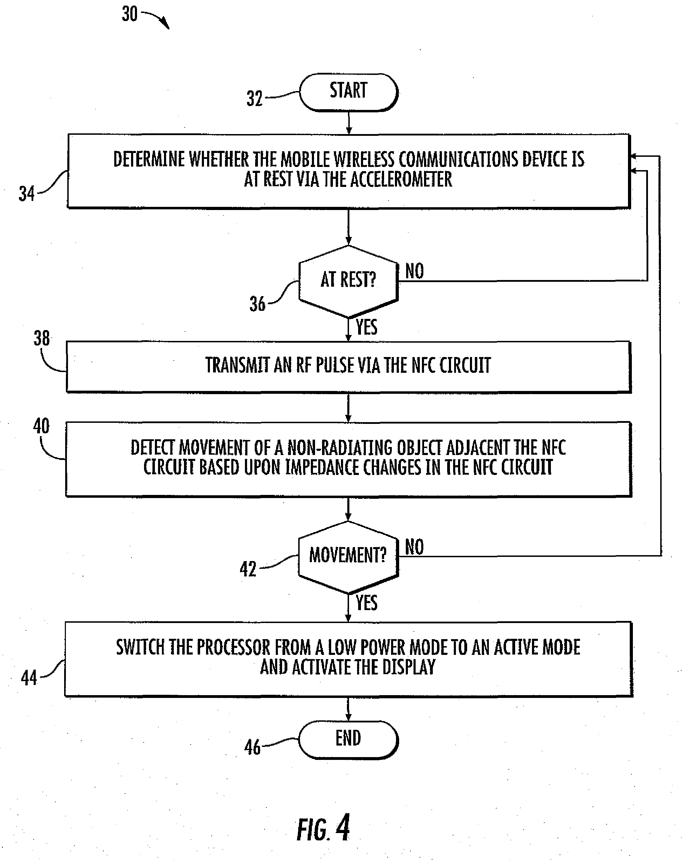

A typical operation of the mobile wireless communications device **10** of FIG. 1 is now described with reference to the flowchart **30** of FIG. 4. Here, after the start (Block **32**), the processor **12** determines whether the mobile wireless communications device **10** is at rest, via the accelerometer **18"** (Block **34**). If the mobile wireless communications device **10** is not at rest (Block **36**), the processor **12** continues to monitor the accelerometer **18** until such time as it determines that the mobile wireless communications device **10** is indeed at rest.

If the mobile wireless communications device **10** is at rest (Block **36**), the processor **12** transmits an RF pulse via the NFC circuit **22** (Block **38**). The processor **12** then detects movement of a non-radiating object adjacent the NFC circuit **22** based upon impedance changes in the NFC circuit **22** caused by the presence of an adjacent non-radiating object (Block **40**). If movement is not detected (Block **42**), the processor **12** then goes back to determining whether the mobile wireless communications device **10** is at rest via the accelerometer **18** (Block **34**).

If movement is detected (Block **42**), the processor **12** switches itself from a lower power mode to an active mode and activates the display (Block **44**). Block **46** indicates the end of the sample operation of the mobile wireless communications device **10.**

This operation allows the mobile wireless communications device **10** to be awakened (i.e. the display is activated and the processor is switched to the active mode) without being physically touched. This may be particularly convenient when the mobile wireless communications device **10** is at rest on a surface, such as a desk, and it is desired to see the home screen thereof. Rather than using physical contact to pick up the mobile wireless communications device **10** and to activate the input device **24,** a simple wave of the hand may awaken the mobile wireless communications device and allow quick and easy viewing of the home screen.

It should be understood that the processor **12** may be configured place the mobile wireless communications device **10** in a "locked" mode, for example based upon the input device **24** or upon passage of a period of time. To exit this "locked" mode, and enable regular operation of the mobile wireless communications device **10**, an authentication may be performed. The authentication may be the entry of a password via the input device **10,** or the entry of a given sequence of keys via the input device **10,** for example. When awakened from the "locked" mode by a wave of the hand, the display of the mobile wireless communications device **10** may be activated, but input of the authentication will have to be performed before the mobile wireless communications device is returned to a normal mode of operation, in some applications.

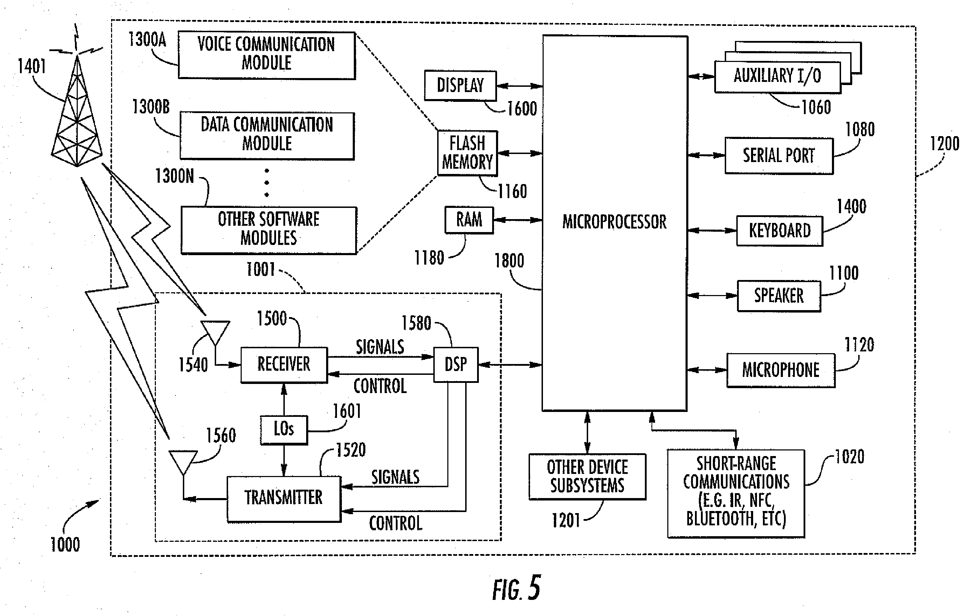

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the disclosure will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included within the scope of the appended claims.

## Claims

1. A mobile wireless communications device (10) comprising:
a wireless transceiver (16);
a Near Field Communications, NFC, device;
an accelerometer (18");
a processor (12) coupled with the wireless transceiver, the NFC device, and the accelerometer, the processor being configured to
determine whether the mobile wireless communications device is at rest based upon said accelerometer;
detect movement of a non-radiating object by said NFC device when the non-radiating object is adjacent to said NFC device; and
perform at least one function based upon the detection of movement and a determination that the mobile wireless communications device is at rest.

2. The mobile wireless communications device (10') of Claim 1, wherein said processor (12') is switchable between a first mode and a second mode; and wherein the at least one function comprises switching between the first mode and the second mode.

3. The mobile wireless communications device (10') of Claim 2, wherein the first mode comprises a low power mode; and wherein the second mode comprises an active mode.

4. The mobile wireless communications device (10") of Claim 1, further comprising a display (20") coupled with said processor (12")*;* and wherein the at least one function comprises activation of said display.

5. The mobile wireless communications device (10") of Claim 1, wherein said processor (12") is configured to detect movement based upon an impedance change in said NFC device.

6. The mobile wireless communications device (10) of Claim 1, wherein said wireless transceiver (16) comprises a cellular transceiver.

7. A method of operating a mobile wireless communications device (10) comprising a processor (12) cooperating with a wireless transceiver (16) for wireless communications and cooperating with an accelerometer (18"), the method comprising:
determining whether the mobile wireless communications device is at rest based upon the accelerometer;
detecting movement of a non-radiating object by a NFC device of the mobile wireless communication device when the non-radiating object is adjacent to said NFC device, using the processor; and
performing at least one function based upon the detected movement and based upon a determination that the mobile wireless communications device is at rest, using the processor.

8. The method of Claim 7, wherein the at least one function comprises switching between the processor (12') between a first mode and a second mode.

9. The method of Claim 7, wherein the at least one device function comprises activation of a display (20*")*.

10. The method of Claim 7, wherein movement is detected based upon an impedance change in the NFC circuit (22*"*) .

## Patentansprüche

1. Mobile drahtlose Kommunikationsvorrichtung (10), umfassend:
eine drahtlose Sende-Empfangseinheit (16);
eine Vorrichtung für Nahfeldkommunikation, NFC;
einen Beschleunigungssensor (18");
einen Prozessor (12), der mit der drahtlosen Sende-Empfangseinheit, der NFC-Vorrichtung und dem Beschleunigungssensor gekoppelt ist, wobei der Prozessor konfiguriert ist, um
zu bestimmen, ob sich die mobile drahtlose Kommunikationsvorrichtung basierend auf dem Beschleunigungssensor im Ruhezustand befindet;
eine Bewegung eines nicht strahlenden Objekts durch die NFC-Vorrichtung zu erfassen, wenn sich das nicht strahlende Objekt benachbart der NFC-Vorrichtung befindet; und
mindestens eine Funktion auf der Grundlage des Erfassens einer Bewegung und einer Bestimmung, dass sich die mobile drahtlose Kommunikationsvorrichtung im Ruhezustand befindet, auszuführen.

2. Mobile drahtlose Kommunikationsvorrichtung (10') nach Anspruch 1, wobei der Prozessor (12') zwischen einem ersten Modus und einem zweiten Modus umschaltbar ist; und wobei die mindestens eine Funktion das Umschalten zwischen dem ersten Modus und dem zweiten Modus umfasst.

3. Mobile drahtlose Kommunikationsvorrichtung (10') nach Anspruch 2, wobei der erste Modus einen Energiesparmodus umfasst; und wobei der zweite Modus einen aktiven Modus umfasst.

4. Mobile drahtlose Kommunikationsvorrichtung (10") nach Anspruch 1, weiter umfassend eine Anzeige (20"), die mit dem Prozessor (12") gekoppelt ist; und wobei die mindestens eine Funktion die Aktivierung der Anzeige umfasst.

5. Mobile drahtlose Kommunikationsvorrichtung (10") nach Anspruch 1, wobei der Prozessor (12") konfiguriert ist, um Bewegung auf der Grundlage einer Impedanzänderung in der NFC-Vorrichtung zu erfassen.

6. Mobile drahtlose Kommunikationsvorrichtung (10) nach Anspruch 1, wobei die drahtlose Sender-Empfangseinheit (16) eine zellulare Sende-Empfangseinheit umfasst.

7. Verfahren zum Betreiben einer mobilen drahtlosen Kommunikationsvorrichtung (10), umfassend einen Prozessor (12), der mit einer drahtlosen Sende-Empfangseinheit (16) zur drahtlosen Kommunikation zusammenwirkt und mit einem Beschleunigungssensor (18") zusammenwirkt, wobei das Verfahren umfasst:
Bestimmen, ob sich die mobile drahtlose Kommunikationsvorrichtung basierend auf dem Beschleunigungssensor im Ruhezustand befindet;
Erfassen der Bewegung eines nicht strahlenden Objekts durch eine NFC-Vorrichtung der mobilen drahtlosen Kommunikationsvorrichtung, wenn sich das nicht strahlende Objekt benachbart der NFC-Vorrichtung befindet, unter Verwendung des Prozessors; und
Ausführen mindestens einer Funktion auf der Grundlage der erfassten Bewegung und auf der Grundlage einer Bestimmung, dass sich die mobile drahtlose Kommunikationsvorrichtung im Ruhezustand befindet, unter Verwendung des Prozessors.

8. Verfahren nach Anspruch 7, wobei die mindestens eine Funktion das Umschalten zwischen dem Prozessor (12') zwischen einem ersten Modus und einem zweiten Modus umfasst.

9. Verfahren nach Anspruch 7, wobei die mindestens eine Vorrichtungsfunktion die Aktivierung einer Anzeige (20") umfasst.

10. Verfahren nach Anspruch 7, wobei Bewegung auf der Grundlage einer Impedanzänderung in der NFC-Schaltung (22") erfasst wird.

## Revendications

1. Dispositif de communication sans fil mobile (10) comprenant :
un émetteur-récepteur sans fil (16) ;
un dispositif de communication en champ proche, NFC ;
un accéléromètre (18*"*) ;
un processeur (12) couplé à l'émetteur-récepteur sans fil, au dispositif NFC et à l'accéléromètre, le processeur étant configuré pour
déterminer si le dispositif de communication sans fil mobile est au repos sur la base dudit accéléromètre ;
détecter le mouvement d'un objet non-rayonnant par ledit dispositif NFC lorsque l'objet non-rayonnant est adjacent audit dispositif NFC ; et
réaliser au moins une fonction sur la base de la détection de mouvement et d'une détermination selon laquelle le dispositif de communication sans fil mobile est au repos.

2. Dispositif de communication sans fil mobile (10*'*) de la revendication 1, dans lequel ledit processeur (12*'*) peut commuter entre un premier mode et un deuxième mode ; et dans lequel l'au moins une fonction comprend la commutation entre le premier mode et le deuxième mode.

3. Dispositif de communication sans fil mobile (10*'*) de la revendication 2, dans lequel le premier mode comprend un mode basse puissance ; et dans lequel le deuxième mode comprend un mode actif.

4. Dispositif de communication sans fil mobile (10") de la revendication 1, comprenant en outre un dispositif d'affichage (20") couplé audit processeur (12") ; et dans lequel l'au moins une fonction comprend l'activation dudit dispositif d'affichage.

5. Dispositif de communication sans fil mobile (10") de la revendication 1, dans lequel ledit processeur (12") est configuré pour détecter un mouvement sur la base d'un changement d'impédance dans ledit dispositif NFC.

6. Dispositif de communication sans fil mobile (10) de la revendication 1, dans lequel ledit émetteur-récepteur sans fil (16) comprend un émetteur-récepteur cellulaire.

7. Procédé de fonctionnement d'un dispositif de communication sans fil mobile (10) comprenant un processeur (12) coopérant avec un émetteur-récepteur sans fil (16) pour des communications sans fil et coopérant avec un accéléromètre (18"), le procédé comprenant les étapes consistant à :
déterminer si le dispositif de communication sans fil mobile est au repos sur la base de l'accéléromètre ;
détecter le mouvement d'un objet non-rayonnant par un dispositif NFC du dispositif de communication sans fil mobile lorsque l'objet non-rayonnant est adjacent audit dispositif NFC, en utilisant le processeur ; et
réaliser au moins une fonction sur la base du mouvement détecté et sur la base d'une détermination selon laquelle le dispositif de communication sans fil mobile est au repos, en utilisant le processeur.

8. Procédé de la revendication 7, dans lequel l'au moins une fonction comprend la commutation du processeur (12') entre un premier mode et un deuxième mode.

9. Procédé de la revendication 7, dans lequel l'au moins une fonction de dispositif comprend l'activation d'un dispositif d'affichage (20") .

10. Procédé de la revendication 7, dans lequel le mouvement est détecté sur la base d'un changement d'impédance dans le circuit NFC (22") .
